# EUROPEAN PATENT APPLICATION

(11) **EP 4 505 974 A1**
(43) Date of publication of application: **12.02.2025**
(21) Application number: 23935636.3
(22) Date of filing: 22.08.2023
(51) Int. Cl.: A61C 17/02

(54) **CONTROL VALVE MECHANISM CAPABLE OF CONTROLLING INTERCEPTION AND PASSAGE OF WATER STREAM, AND WATER FLOSSER HANDLE**

(30) Priority: 04.05.2023 CN 202310486808
(71) Applicant: Bixdo (SH) Healthcare Technology Co., Ltd., Shanghai 201100 (CN); Guang Dong Bixdo Health Technology Co., Ltd., Foshan, Guangdong 528300 (CN)
(72) Inventor: LIU, Fei, Shanghai 201100 (CN); ZHANG, Xiang, Shanghai 201100 (CN); LI, Yi, Shanghai 201100 (CN)
(74) Representative: IPrime Rentsch Kaelin AG
(86) International application number: PCT/CN2023/114285
(87) International publication number: WO 2024/227324

(57) **Abstract**

A control valve mechanism and an oral irrigator handle, wherein the oral irrigator handle includes: a handle housing (1), the control valve mechanism, a nozzle (3), and a water pipe mechanism (4); wherein the water pipe mechanism (4) and the nozzle (3) are each in communication with the control valve mechanism, and the handle housing (1) encloses the aforementioned structures to provide protection therefor and prepare for gripping for the user. When the control valve mechanism is opened, the water pipe mechanism (4) transmits the pulsed waterflow from the oral irrigator main body through the control valve mechanism to the nozzle (3) for ejection. Alternatively, when the control valve mechanism is closed, the transmission between the water pipe mechanism (4) and the nozzle (3) is interrupted, and is not under the influence of leakage caused by the pressure difference between the residual water in the water pipe mechanism (4) and the water level of the oral irrigator main body.

## Description

### CROSS-REFERENCE TO RELATED APPLICATIONS

The present disclosure claims priority to a Chinese patent application No. 202310486808.4 filed with the CNIPA on May 4, 2023 and entitled "CONTROL VALVE MECHANISM AND ORAL IRRIGATOR HANDLE CAPABLE OF CONTROLLING BLOCKING OR COMMUNICATING OF WATERFLOW", which is hereby incorporated by reference in its entirety.

### TECHNICAL FIELD

The present disclosure relates to a control valve mechanism and an oral irrigator handle capable of controlling blocking or communicating of waterflow.

### BACKGROUND

In the prior art, there are still some deficiencies in the structural design of the desktop oral irrigator handle, which are manifested in the control of the waterflow of the handle. A conventional handle uses a single mechanical control handle to control blocking or communicating of the waterflow, which cannot completely shut-off the waterflow, and there is a risk of water leakage/dripping (pressure difference due to different liquid levels) after the handle is below the water level in the oral irrigator main body for a long time. However, due to the hand-held characteristics of the oral irrigator handle, there is no commercially-available control valve applicable to the oral irrigator handle. Therefore, this disclosure comes into being.

### SUMMARY

The first objective of the present disclosure is to provide a control valve mechanism capable of conveniently performing blocking and communicating of waterflow.

The second objective of the present disclosure is to provide an oral irrigator handle capable of conveniently performing blocking and communicating of waterflow.

To achieve the first objective, the present disclosure provides a control valve mechanism capable of controlling blocking or communicating of waterflow, comprising:
a valve seat provided therein with at least a water intaking chamber and a control chamber, the water intaking chamber being in communication with the control chamber through a communicating passage, and the control chamber being provided with a mounting port;
a control valve spool provided in the control chamber through the mounting port and provided with a force-applying part which is controlled by the control valve spool to apply force towards the water intaking chamber; and
a blocking seal comprising a blocking seal body and an elastic restoring member, the blocking seal body being provided in the water intaking chamber, restorably blocking the communicating passage by the elastic restoring member, being provided with a force-bearing part that is subjected to force from the force-applying part through the communicating passage, and being moved to open the communicating passage after the force-bearing part is subjected to force from the force-applying part.

Preferably, the control valve spool comprises:
a valve spool body comprising a curved surface with a gradient circumferential radius, the force-applying part being implemented as the curved surface; and
a control assembly comprising a first arc-shaped toothed segment and a first straight toothed segment, the first arc-shaped toothed segment being provided on the valve spool body and located outside the mounting port, the first straight toothed segment being meshed with the first arc-shaped toothed segment to drive the valve spool body to rotate inside the control chamber, and the curved surface gradually applying force to the force-bearing part due to rotation of the valve spool body.

Preferably, the curved surface is provided with a constraining slot for holding the force-bearing part, and when the force-bearing part is held in the constraining slot, the blocking seal body keeps a state of opening the communicating passage.

Preferably, the force-bearing part is implemented as a force-bearing rod body, which passes through the communicating passage and is subjected to force from the force-applying part to drive the blocking seal body to open the communicating passage.

Preferably, the communicating passage has a diameter greater than a rod diameter of the force-bearing rod body
Preferably, a top of the blocking seal body is capable of blocking the communicating passage.

Preferably, the communicating passage comprises a perforation and several communication holes; the force-bearing rod body is inserted into the perforation and is subjected to force from the force-applying part; the communication hole is in communication with the control chamber and the water intaking chamber, and is restorably blocked by the blocking seal body by means of the elastic restoring member.

Preferably, the blocking seal body is provided with a first blocking seal ring near the communication hole, and the first blocking seal ring restorably seals the communicating passage along with the blocking seal body by means of the elastic restoring member.

Preferably, a top of the blocking seal body is capable of blocking the perforation, and/or, the force-bearing rod body and the perforation form a contact seal therebetween.

Preferably, the control valve mechanism further comprises a mounting branch pipe, which is provided with a mounting bracket therein, one end of the mounting branch pipe is in communication with the water intaking chamber, the other end of the mounting branch pipe is for communication with the water pipe mechanism, and the elastic restoring member is provided between the mounting bracket and the blocking seal body.

Preferably, the elastic restoring member is a spring and is installed between the mounting bracket and the blocking seal body.

The above technical solutions exhibit the following beneficial effects:
The blocking seal body blocks the passage between the water intaking chamber and the control chamber by means of the elastic restoring member, which can completely cut off and block the waterflow. During use, the control valve spool is actuated to apply force to the blocking seal body, so as to jack up the blocking seal body and open the passage, thereby achieving communication between the two chambers, and subsequently achieving respective communication with the two chambers. The structure is arranged linearly, is simple and convenient to operate, and may block waterflow without water leakage.

The force-applying part is the curved surface with a gradient circumferential radius, and when the valve spool body is rotated, the circumferential radius of the curved surface close to the force-bearing part gradually increases and gradually presses on the blocking seal body, such that the blocking seal body opens the communicating passage, and the process is smooth and convenient.

A constraining slot is provided where the curved surface presses against the force-bearing part to open the communicating passage, such that the force-bearing part may be held in the constraining slot through elastic support of the elastic restoring member. By keeping the opened state of the communicating passage, it is possible to facilitate the continuous flow of waterflow, which in turn makes it convenient for the user to continuously perform oral cleansing operations.

The control assembly achieves pure mechanical transmission through direct meshing of the toothed segments, eliminating the need for electrified structural settings on the handle, and facilitating cost-effectiveness and an intuitive and effective control.

To achieve the second objective, the present disclosure provides an oral irrigator handle capable of controlling the blocking or communicating of waterflow, characterized by comprising a handle housing, a nozzle, a water pipe mechanism, and the above control valve mechanism capable of controlling blocking or communicating of waterflow; the handle housing comprises a mounting chamber therein, a top mounting port at its top, and a bottom mounting port at its bottom; the control valve mechanism is provided in the mounting chamber, the nozzle is in communication with the control chamber through the top mounting port, and the water pipe mechanism is in communication with the water intaking chamber and the oral irrigator main body through the bottom mounting port.

The above technical solutions exhibit the following beneficial effects:
The blocking seal body blocks the passage between the water intaking chamber and the control chamber by means of the elastic restoring member, which can completely cut off and block the waterflow. During use, the control valve spool is actuated to apply force to the blocking seal body, so as to jack up the blocking seal body and open the passage, thereby achieving communication between the two chambers, and subsequently achieving respective communication with the two chambers. The structure is arranged linearly, is simple and convenient to operate, and may block waterflow without water leakage.

In the blocking state, even if there is a liquid level difference between the water intaking chamber of the oral irrigator main body and the handle, the pressure exerted by the liquid in the water intaking chamber on the blocking seal body may better seal the communicating passage, thus creating a positive effect. As a result, there is no risk of leaks/drips when the handle is below the water level in the oral irrigator main body for a long period of time.

The components inside the handle are arranged in a linear configuration, which is in line with the ergonomic design of the handle, making it more compact and convenient to hold and use.

### BRIEF DESCRIPTION OF THE DRAWINGS

FIG. 1 illustrates a schematic view of a structure of an oral irrigator handle of the present disclosure.
FIG. 2 illustrates an exploded view of the structure of the oral irrigator handle of the present disclosure.
FIG. 3 illustrates a schematic view of the structure of a control valve mechanism of the present disclosure.
FIG. 4 illustrates a side view of the oral irrigator handle of the present disclosure.
FIG. 5 illustrates a cross-sectional view along A-A in FIG. 4.
FIG. 6 illustrates a cross-sectional three-dimensional view of a state in which the control valve mechanism blocks the communicating passage in the present disclosure.
FIG. 7 illustrates an enlarged view of a portion of FIG. 6.
FIG. 8 illustrates a cross-sectional three-dimensional view of a state in which the control valve mechanism opens the communicating passage in the present disclosure.
FIG. 9 illustrates an enlarged view of a portion of FIG. 8.
FIG. 10 illustrates a relative position diagram of a valve spool and a blocking seal body in the present disclosure.
FIG. 11 illustrates a perspective view of the valve spool in the present disclosure.
FIG. 12 illustrates a front view of the valve seat in the present disclosure.
FIG. 13 illustrates a cross-sectional view along B-B in FIG. 12.
FIG. 14 illustrates a schematic view of a structure of a mounting branch pipe in the present disclosure.
FIG. 15 illustrates a schematic view of a structure of a water pipe mechanism in the present disclosure.

Wherein:
handle housing 1; first shell 11; shell mounting port 111; second shell 12; top mounting port 13; bottom mounting port 14; valve seat 21; water intaking chamber 211; control chamber 212; mounting port 2121; water discharging chamber 213; perforation 2141; communication hole 2142; control valve spool 22; spindle 221; force-applying part 2211; constraining slot 2212; first spindle seal ring 222; first spindle seal slot 2221; second spindle seal ring 223; second spindle seal slot 2231; first arc-shaped toothed segment 224; mounting terminal plate 2241; blocking seal body 23; force-bearing part 231; first blocking seal ring 232; elastic restoring member 24; mounting branch pipe 25; mounting bracket 251; pushing button 26; first straight toothed segment 261; nozzle 3; water pipe mechanism 4; pipe core 41; first pipe core seal slot 411; first pipe core seal ring 412; connecting hard pipe 42; conical portion 421; water pipe 43; protection bottom shell 44.

### DETAILED DESCRIPTION

The preferred embodiment described below is merely exemplary, and those skilled in the art may conceive of other obvious variations. The basic principles defined in the following description of the present disclosure may be applied to other implementations, variations, improvements, equivalents, and other technical solutions that do not deviate from the spirit and scope of the present disclosure.

Those skilled in the art should understand that in the disclosure of this invention, orientation or position relationships referred by terms such as "longitudinal", "transverse", "up", "down", "front", "back", "left", "right", "vertical", "horizontal", "top", "bottom", "inner", and "outer", are based on the orientation or position as shown in the accompanying drawings, are used solely for the purpose of description and to simplify the description of the present disclosure, and are not intended to indicate or imply that The device or element referred to must have a specific orientation, be constructed and operate in a specific orientation. Therefore, these terms should not be interpreted as limiting the scope of the present disclosure.

In the present embodiment, "circumferential radius" is defined as a distance from any point on the curved surface to the rotation axis of the valve spool body, and is used to describe a gradually expanding structural form of the curved surface, so as to realize the gradual pressing on the blocking seal body.

### Embodiment One:

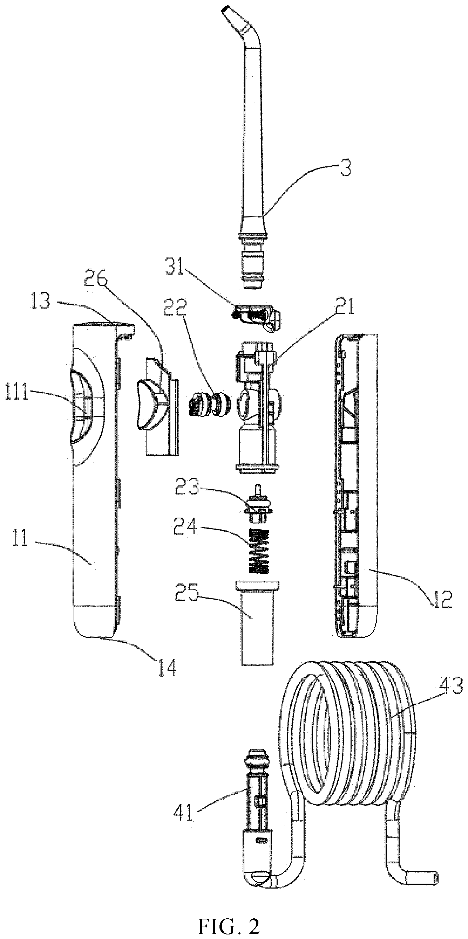

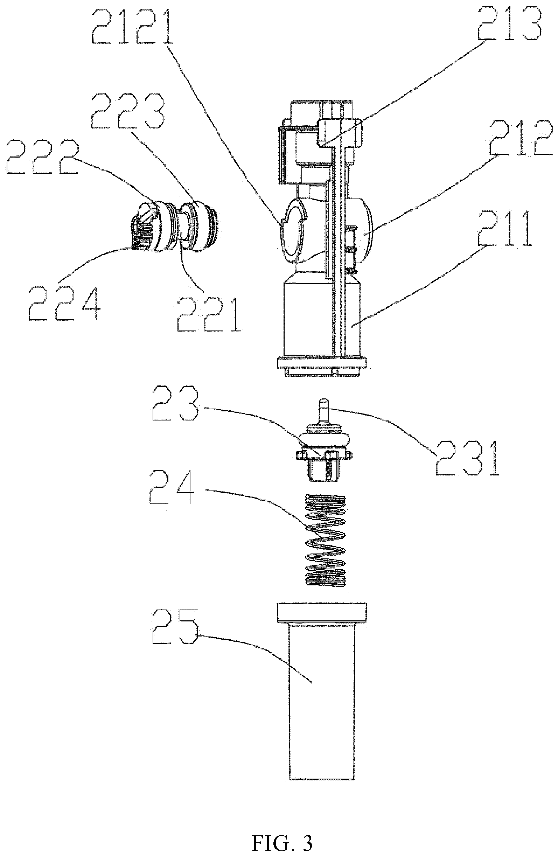

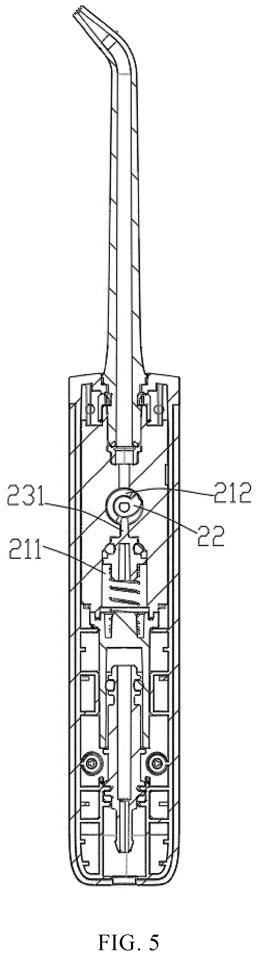

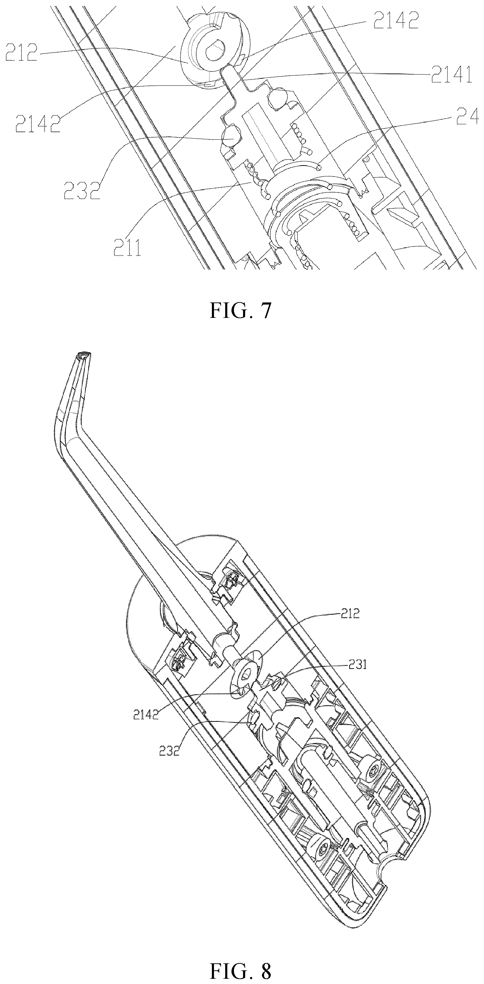

Please first refer to FIG. 3 in conjunction with FIGS. 2 to 9, the present embodiment provides a control valve mechanism capable of controlling the blocking or communicating of waterflow, which comprises at least a valve seat 21, a control valve spool 22, and a blocking seal. Wherein, the valve seat 21 is provided therein with at least a water intaking chamber 211 and a control chamber 212. The water intaking chamber 211 is in communication with the control chamber 212 through a communicating passage, and the control chamber 212 is provided with a mounting port 2121.

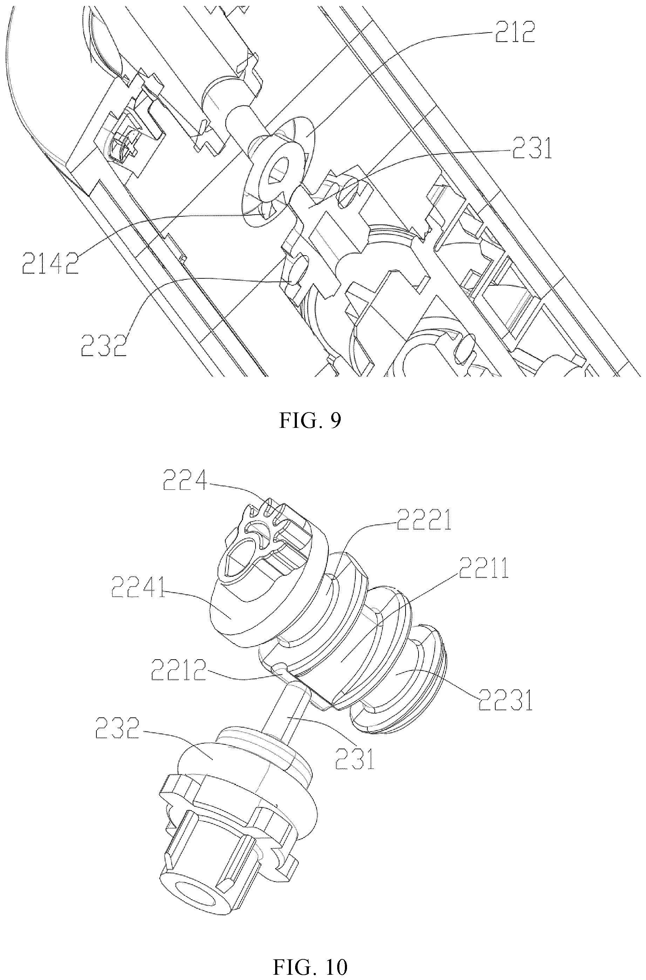

Please refer to FIGS. 3 and 10, the control valve spool 22 is provided in the control chamber 212 through the mounting port 2121, and is provided with a force-applying part 2211 which is under control of the control valve spool 22 to apply force towards the water intaking chamber 211. The blocking seal comprises a blocking seal body 23 and an elastic restoring member 24. The blocking seal body 23 is provided in the water intaking chamber 211, restorably blocks the communicating passage through the elastic restoring member 24, is provided with a force-bearing part 231 that is subjected to force from the force-applying part 2211 through the communicating passage, and is moved to open the communicating passage after the force-bearing part 231 is subjected to force from the force-applying part 2211.

In the present embodiment, the blocking seal body 23 blocks the passage between the water intaking chamber 211 and the control chamber 212 by means of the elastic restoring member 24, which can completely cut off and block the waterflow. During use, the control valve spool 22 is actuated to apply force to the blocking seal body 23, so as to jack up the blocking seal body 23 and open the passage, thereby achieving communication between the two chambers, and subsequently achieving respective communication with the two chambers. The structure is arranged linearly, is simple and convenient to operate, and may block waterflow without water leakage.

The above technical solution is basically essential to realize the present embodiment, which is described in further detail below in conjunction with the accompanying drawings and specific embodiments:
As a preferred implementation of the present embodiment, please refer to FIG. 3, the valve seat 21 in the present embodiment further comprises a water discharging chamber 213, which is in direct communication with the control chamber 212 and is installed with the nozzle 3 as an indirect extension of the control chamber 212.

The control valve spool 22, serving as a core control component, comprises a valve spool body and a control assembly. The valve spool body applies force to the blocking seal body 23 by rotating, so as to drive the blocking seal body 23 to open the communicating passage. This force is canceled after the valve spool body rotates back, and the blocking seal body 23 is restored under the action of the elastic restoring member 24 and re-blocks the communicating passage. The control assembly facilitates the mechanical control of the rotation of the body of the control valve spool 22 by the user.

Specifically, please refer to FIGS. 2, 10 and 11, the valve spool body is provided with a curved surface with a gradient circumferential radius, and the force-applying part 2211 is implemented as the curved surface. The control assembly comprises a first arc-shaped toothed segment 224 and a first straight toothed segment 261. The first arc-shaped toothed segment 224 is provided on the valve spool body and is located outside the mounting port, and the first straight toothed segment 261 is meshed with the first arc-shaped toothed segment 224 to drive the valve spool body to rotate inside the control chamber 212. As a result, the curved surface gradually applies force to the force-bearing part 231 due to rotation of the valve spool body.

For ease of operation by the user, a shell mounting port 111 is also provided on the handle housing. The first straight toothed segment 261 is provided on a pushing button 26, which is located inside the shell mounting port 111. Specifically, the position of the shell mounting port 111 corresponds to the control valve spool 22. The user achieves the meshing drive between the first arc-shaped toothed segment 224 and the first straight toothed segment 261 by means of the pushing button 26.

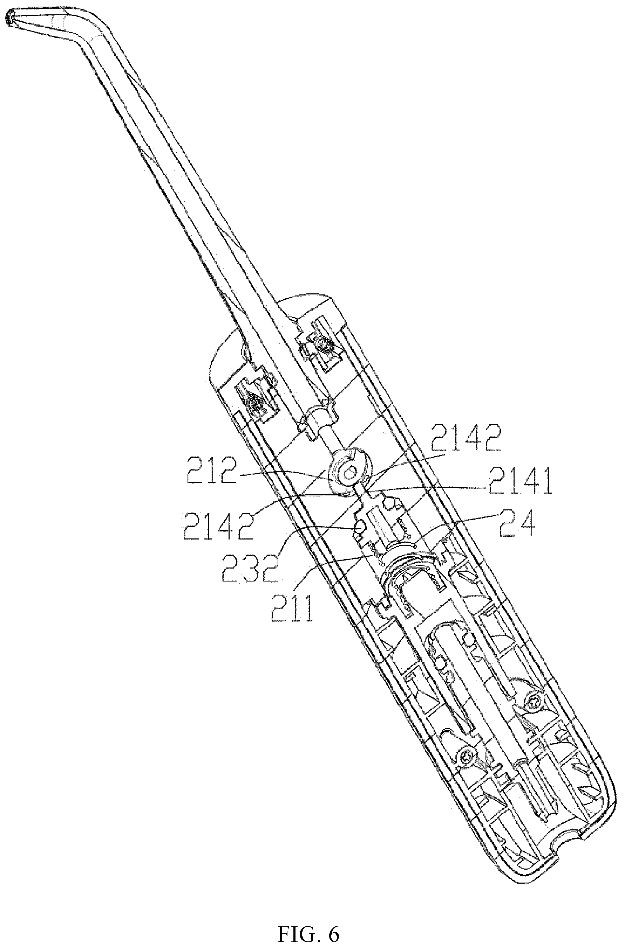

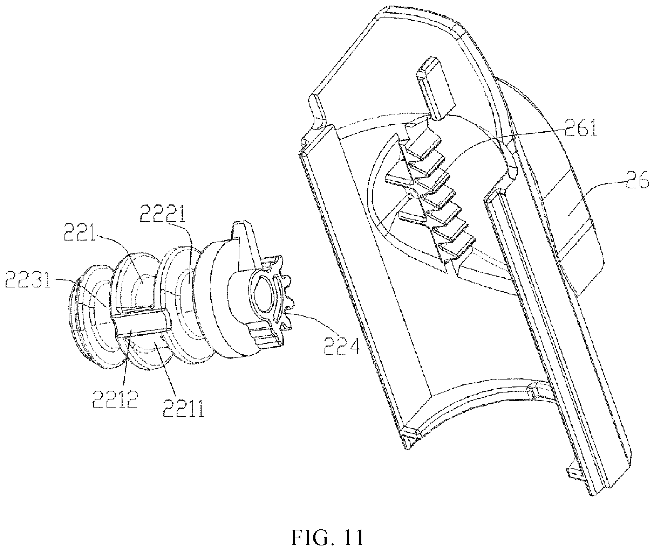

Further, please refer to FIGS. 3, 10, and 11, the shape of the valve spool body is not uniquely defined in the present embodiment. As a preferred implementation of the present embodiment, the control chamber 212 on the valve seat 21 is a through-hole. The control chamber 212 is defined as a cavity of the through-hole where the spindle 221 being the valve spool body is inserted. The two ends of the spindle 221 are respectively provided with a first spindle seal slot 2221 and a second spindle seal slot 2231. The first spindle seal slot 2221 is provided with a first spindle seal ring 222 therein, and the second spindle seal slot 2231 is provided with a second spindle seal ring 223 therein, so as to seal the two ends of the through-hole, such that the spindle 221 does not cause leakage when rotating, while a space is formed between the spindle 221 and the inside of the through-hole for waterflow to pass through. Please refer to FIGS. 10 and 11 and in conjunction with FIGS. 6 to 9, the spindle 221 also has a curved surface structure with an increasing circumferential radius. As mentioned above, the circumferential radius is interpreted as the distance from any curved surface on the curved surface structure to the rotation axis of the spindle 221. As the spindle 221 rotates, the curved surface of the spindle 221 gradually approaches the force-bearing part 231 until it contacts and applies force to it, thereby pressing the force-bearing part 231 to drive the blocking seal body 23 to open the communicating passage. Preferably, the spindle structure may be implemented as a whistle shape, and the curved surface is implemented as the outer surface of the spindle.

Furthermore, the first arc-shaped toothed segment 224 is provided at one end of the spindle 221 via a mounting terminal plate 2241 and works in conjunction with the first straight toothed segment 261 to complete the self-rotation driving of the spindle 221.

Please refer to FIG. 10, due to the gradually applied force from the curved surface, under the elastic reaction force of the spring restoring member, the user has to keep the state of pressing the curved surface against the force-bearing part 231, which has been capable of completing the control on the valve spool in the present embodiment. However, to further facilitate the user, as a preferred implementation of the present embodiment, a constraining slot 2212 is provided on the curved surface to hold the force-bearing part 231. When the force-bearing part 231 is held in the constraining slot 2212, the blocking seal body 23 keeps the state of opening the communicating passage. Specifically, when the spindle 221 rotates to open the blocking seal body 23, the elastic restoring member 24 is subjected to force and deforms until the constraining slot 2212 of the spindle 221 holds the force-bearing part 231. At this point, the force-bearing part 231 may keep the state of opening the communicating passage without the need for external force, and blocking the communicating passage is simply a matter of rotating the spindle 221 to disengage the force-bearing part 231 from the constraining slot 2212.

In the present embodiment, the force-bearing part 231 is not limited to a specific shape: its purpose is to move under force from the force-applying part 2211, and thus it is not specifically limited in shape. As a preferred implementation of the present embodiment, the force-bearing part 231 is implemented as a force-bearing rod body, which passes through the communicating passage and is subjected to force from the force-applying part 2211 to drive the blocking seal body 23 to open the communicating passage.

The communicating passage, serving as a channel connecting the water intaking chamber 211 and the control chamber 212, is presented in two forms in the present embodiment:
The first form: the communicating passage is a single through-hole, the diameter of which is greater than the rod diameter of the force-bearing rod body, such that the force-bearing rod body, even when being inserted into the communicating passage, is subjected to a force from the force-applying part 2211 to move downward, it does not hinder the transmission of the waterflow. At this point, in the blocking state, the top of the blocking seal body 23 seals the communicating passage; in the communicating state, the blocking seal body 23 opens the communicating passage, and although the force-bearing rod body is inserted into the communicating passage, it does not hinder the transmission of the waterflow. Although the present embodiment is not accompanied by corresponding figures, it may be unambiguously derived in conjunction with the second embodiment.

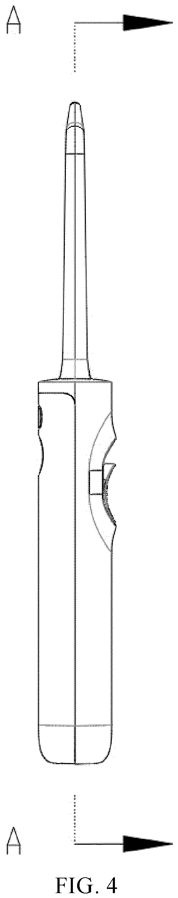

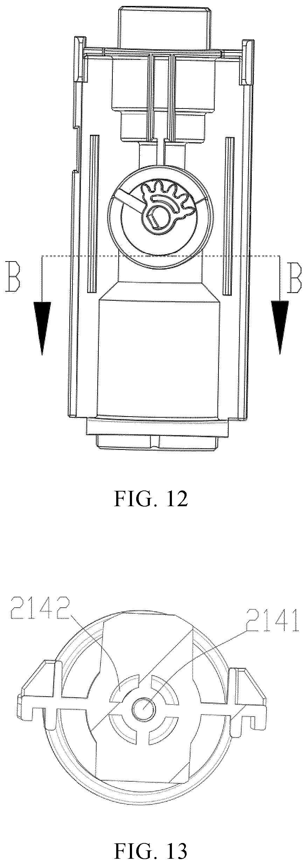

The second form: please refer to FIGS. 4 to 9 in conjunction with FIGS. 12 and 13, the communicating passage comprises a perforation 2141 and several communication holes 2142. The force-bearing rod body is inserted into the perforation 2141 and is subjected to force from the force-applying part 2211. The communication hole 2142 is in communication with the control chamber 212 and the water intaking chamber 211, and is restorably blocked by the blocking seal body 23 by means of the elastic restoring member 24. Furthermore, the blocking seal body 23 is provided with a first blocking seal ring 232 near the communication hole 2142, and the first blocking seal ring 232 may restorably seal the communicating passage along with the blocking seal body 23 by means of the elastic restoring member 24.

The force-bearing rod body passes through the perforation 2141 into the control chamber 212 and contacts the valve spool, and in order to achieve the effect of blocking the waterflow with the perforation 2141, the top of the blocking seal body 23 may seal the perforation 2141, or a contact seal (i.e., no gap between the two) may be formed between the force-bearing rod body and the perforation 2141. Furthermore, to achieve the best sealing effect, the top of the blocking seal body 23 may seal the perforation 2141, and the contact seal may be formed between the force-bearing rod body and the perforation 2141.

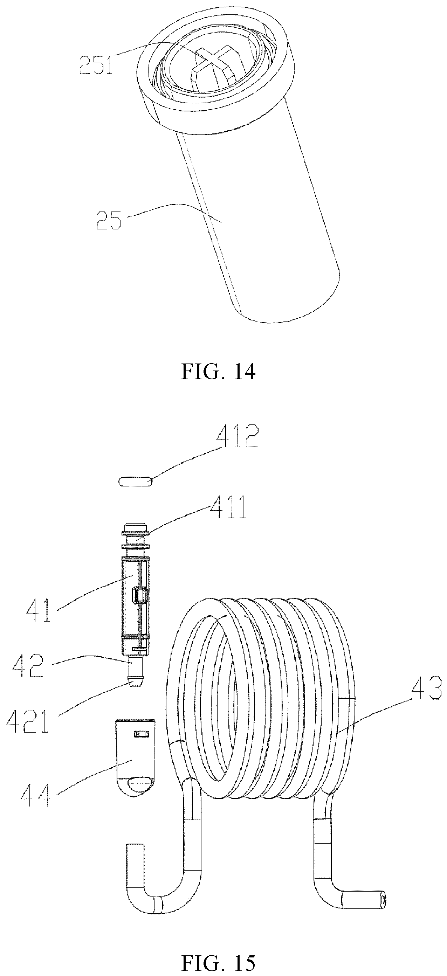

Please refer to FIGS. 3 and 14, the elastic restoring member 24, serving as a structural member capable of restoring the blocking seal body 23, may be installed at the bottom onto the inner wall of the water intaking chamber 211. However, to enhance the stability of the elastic restoring member 24, as a preferred implementation of the present embodiment, the control valve mechanism further comprises a mounting branch pipe 25, which is provided with a mounting bracket 251 therein. One end of the mounting branch pipe 25 is in communication with the water intaking chamber 211, and its other end is for communication with the water pipe mechanism 4. The elastic restoring member 24 is provided between the mounting bracket 251 and the blocking seal body 23.

Furthermore, the elastic restoring member 24 is a spring and is installed between the mounting bracket 251 and the blocking seal body 23. Preferably, the mounting bracket 251 is a cross-shaped bracket provided inside the mounting branch pipe 25, which may provide installation support while further facilitating the passage of the waterflow.

The above technical solutions, either individually or in combination, exhibit the following beneficial effects:
The blocking seal body 23 blocks the passage between the water intaking chamber 211 and the control chamber 212 by means of the elastic restoring member 24, which can completely cut off and block the waterflow. During use, the control valve spool 22 is actuated to apply force to the blocking seal body 23, so as to jack up the blocking seal body 23 and open the passage, thereby achieving communication between the two chambers, and subsequently achieving communication between the nozzle 3 and the water pipe mechanism 4 which are in respective communication with the two chambers, so as to perform oral cleansing. The structure is simple and is convenient to operate, and may block waterflow without water leakage.

The force-applying part 2211 is a curved surface with a gradient circumferential radius, and when the valve spool body is rotated, the curved surface close to the force-bearing part 231 gradually increases in its circumferential radius and gradually presses on the blocking seal body 23, such that the blocking seal body 23 opens the communicating passage. This process is smooth and convenient.

A constraining slot 2212 is provided where the curved surface presses against the force-bearing part 231 to open the communicating passage, such that the force-bearing part 231 may be held in the constraining slot 2212 through elastic support of the elastic restoring member 24. By keeping the opened state of the communicating passage, it is possible to facilitate the continuous flow of waterflow, which in turn makes it convenient for the user to continuously perform oral cleansing operations.

The control assembly achieves pure mechanical transmission through direct meshing of the toothed segments, eliminating the need for electrified structural settings on the handle, and facilitating cost-effectiveness and an intuitive and effective control.

### Embodiment 2:

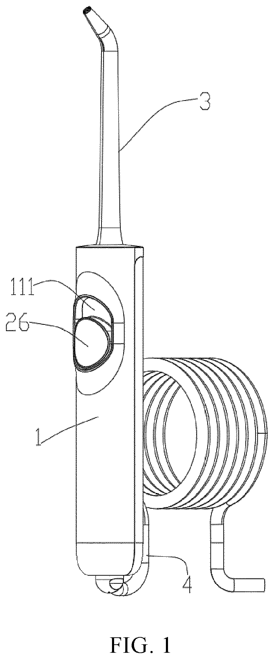

Please refer to FIGS. 1 and 2 in conjunction with FIGS. 3 to 15, the present embodiment provides an oral irrigator handle capable of controlling the blocking or communicating of waterflow, which comprises a handle housing 1, a control valve mechanism, a nozzle 3 and a water pipe mechanism 4; wherein the water pipe mechanism 4 and the nozzle 3 are each connected to the control valve mechanism, and the handle housing 1 encloses the aforementioned structures to provide protection therefor and prepare for gripping of the user. When the control valve mechanism is opened, the water pipe mechanism 4 transmits the pulsed waterflow from the oral irrigator main body through the control valve mechanism to the nozzle 3 for ejection; alternatively, when the control valve mechanism is closed, the transmission between the water pipe mechanism 4 and the nozzle 3 is interrupted, and is not under the influence of leakage caused by the pressure difference between the residual water in the water pipe mechanism 4 and the water level of the oral irrigator main body.

Specifically, as shown in FIG. 2, the handle housing 1 comprises a mounting chamber therein, a top mounting port 13 at its top, and a bottom mounting port 14 at its bottom. In the present embodiment, the handle housing 1 comprises a first shell 11 and a second shell 12, which are fitted by a snap fit. This is a conventional design for the oral irrigator handle, and hence will not be further elaborated.

Please refer to FIG. 3 in conjunction with FIGS. 2 to 9, the control valve mechanism is provided inside the mounting chamber, and the control valve mechanism comprises at least a valve seat 21, a control valve spool 22, and a blocking seal. Wherein, the valve seat 21 has at least a water intaking chamber 211 and a control chamber 212 therein, which are interconnected through a communicating passage, and the control chamber 212 has a mounting port 2121. The control valve spool 22 is provided inside the control chamber 212 through the mounting port 2121 and has a force-applying part 2211, which is under control of the control valve spool 22 to apply force towards the water intaking chamber 211. The blocking seal comprises a blocking seal body 23 and an elastic restoring member 24, and the blocking seal body 23 is provided inside the water intaking chamber 211, is capable of restorably blocking the communicating passage through the elastic restoring member 24, has a force-bearing part 231 which is subjected to force from the force-applying part 2211 via the communicating passage, and is moved after being subjected to force from the force-applying part 2211 so as to open the communicating passage.

The nozzle 3 and the water pipe mechanism 4 serve as an oral cleansing component and a water intaking component respectively, and the communication between them is under control of the control valve mechanism. Wherein, the nozzle 3 is in communication with the control chamber 212 via the top mounting port 13, and the water pipe mechanism 4 is in communication with the water intaking chamber 211 and the oral irrigator main body via the bottom mounting port 14. In the present embodiment, the blocking seal body 23 blocks the passage between the water intaking chamber 211 and the control chamber 212 by means of the elastic restoring member 24, which can completely cut off and block the waterflow. During use, the control valve spool 22 is actuated to apply force to the blocking seal body 23, so as to jack up the blocking seal body 23 and open the passage, thereby achieving communication between the two chambers, and subsequently achieving communication between the nozzle 3 and the water pipe mechanism 4 which are in respective communication with the two chambers, so as to perform oral cleansing. The structure is simple and is convenient to operate, and may block waterflow without water leakage.

The above technical solution is basically essential to realize the present embodiment, which is described in further detail below in conjunction with the accompanying drawings and specific embodiments:

The nozzle 3 is in communication with the control chamber 212 through the top mounting port 13 in a manner including a direct or indirect form: in the direct form, the control chamber 212 comprises a mounting port for the nozzle 3, and the nozzle 3 is directly mounted to the mounting port of the nozzle 3. As a preferred implementation of the present embodiment, the valve seat 21 in the present embodiment further comprises a water discharging chamber 213, which is in direct communication with the control chamber 212 and is installed with the nozzle 3 as an indirect extension of the control chamber 212.

The control valve spool 22, serving as a core control component, comprises a valve spool body and a control assembly. The valve spool body applies force to the blocking seal body 23 by rotating, so as to drive the blocking seal body 23 to open the communicating passage. This force is canceled after the valve spool body rotates back, and the blocking seal body 23 is restored under the action of the elastic restoring member 24 and re-blocks the communicating passage. The control assembly facilitates the mechanical control of the rotation of the body of the control valve spool 22 by the user.

Specifically, please refer to FIGS. 2, 10 and 11, the valve spool body is provided with a curved surface with a gradient circumferential radius, and the force-applying part 2211 is implemented as the curved surface. The control assembly comprises a first arc-shaped toothed segment 224 and a first straight toothed segment 261. The first arc-shaped toothed segment 224 is provided on the valve spool body and is located outside the mounting port, and the first straight toothed segment 261 is meshed with the first arc-shaped toothed segment 224 to drive the valve spool body to rotate inside the control chamber 212. As a result, the curved surface gradually applies force to the force-bearing part 231 due to rotation of the valve spool body.

For ease of operation by the user, a shell mounting port 111 is also provided on the handle housing. The first straight toothed segment 261 is provided on a pushing button 26, which is located inside the shell mounting port 111. Specifically, the position of the shell mounting port 111 corresponds to the control valve spool 22. The user achieves the meshing drive between the first arc-shaped toothed segment 224 and the first straight toothed segment 261 by means of the pushing button 26.

Further, please refer to FIGS. 3, 10, and 11, the shape of the valve spool body is not uniquely defined in the present embodiment. As a preferred implementation of the present embodiment, the control chamber 212 on the valve seat 21 is a through-hole. The control chamber 212 is defined as a cavity of the through-hole where the spindle 221 being the valve spool body is inserted. The two ends of the spindle 221 are respectively provided with a first spindle seal slot 2221 and a second spindle seal slot 2231. The first spindle seal slot 2221 is provided with a first spindle seal ring 222 therein, and the second spindle seal slot 2231 is provided with a second spindle seal ring 223 therein, so as to seal the two ends of the through-hole, such that the spindle 221 does not cause leakage when rotating, while a space is formed between the spindle 221 and the inside of the through-hole for waterflow to pass through. Please refer to FIGS. 10 and 11 and in conjunction with FIGS. 6 to 9, the spindle 221 also has a curved surface structure with an increasing circumferential radius. As mentioned above, the circumferential radius is interpreted as the distance from any curved surface on the curved surface structure to the rotation axis of the spindle 221. As the spindle 221 rotates, the curved surface of the spindle 221 gradually approaches the force-bearing part 231 until it contacts and applies force to it, thereby pressing the force-bearing part 231 to drive the blocking seal body 23 to open the communicating passage.

Furthermore, the first arc-shaped toothed segment 224 is provided at one end of the spindle 221 via a mounting terminal plate 2241 and works in conjunction with the first straight toothed segment 261 to complete the self-rotation driving of the spindle 221.

Please refer to FIG. 10, due to the gradually applied force from the curved surface, under the elastic reaction force of the spring restoring member, the user has to keep the state of pressing the curved surface against the force-bearing part 231, which has been capable of completing the control on the valve spool in the present embodiment. However, to further facilitate the user, as a preferred implementation of the present embodiment, a constraining slot 2212 is provided on the curved surface to hold the force-bearing part 231. When the force-bearing part 231 is held in the constraining slot 2212, the blocking seal body 23 keeps the state of opening the communicating passage. Specifically, when the spindle 221 rotates to open the blocking seal body 23, the elastic restoring member 24 is subjected to force and deforms until the constraining slot 2212 of the spindle 221 holds the force-bearing part 231. At this point, the force-bearing part 231 may keep the state of opening the communicating passage without the need for external force, and blocking the communicating passage is simply a matter of rotating the spindle 221 to disengage the force-bearing part 231 from the constraining slot 2212.

In the present embodiment, the force-bearing part 231 is not limited to a specific shape: its purpose is to move under force from the force-applying part 2211, and thus it is not specifically limited in shape. As a preferred implementation of the present embodiment, the force-bearing part 231 is implemented as a force-bearing rod body, which passes through the communicating passage and is subjected to force from the force-applying part 2211 to drive the blocking seal body 23 to open the communicating passage.

The communicating passage, serving as a channel connecting the water intaking chamber 211 and the control chamber 212, is presented in two forms in the present embodiment:
The first form: the communicating passage is a single through-hole, the diameter of which is greater than the rod diameter of the force-bearing rod body, such that the force-bearing rod body, even when being inserted into the communicating passage, is subjected to a force from the force-applying part 2211 to move downward, it does not hinder the transmission of the waterflow. At this point, in the blocking state, the top of the blocking seal body 23 seals the communicating passage; in the communicating state, the blocking seal body 23 opens the communicating passage, and although the force-bearing rod body is inserted into the communicating passage, it does not hinder the transmission of the waterflow. Although the present embodiment is not accompanied by corresponding figures, it may be unambiguously derived in conjunction with the second embodiment.

The second form: please refer to FIGS. 4 to 9 in conjunction with FIGS. 12 and 13, the communicating passage comprises a perforation 2141 and several communication holes 2142. The force-bearing rod body is inserted into the perforation 2141 and is subjected to force from the force-applying part 2211. The communication hole 2142 is in communication with the control chamber 212 and the water intaking chamber 211, and is restorably blocked by the blocking seal body 23 by means of the elastic restoring member 24. Furthermore, the blocking seal body 23 is provided with a first blocking seal ring 232 near the communication hole 2142, and the first blocking seal ring 232 may restorably seal the communicating passage along with the blocking seal body 23 by means of the elastic restoring member 24.

The force-bearing rod body passes through the perforation 2141 into the control chamber 212 and contacts the valve spool, and in order to achieve the effect of blocking the waterflow with the perforation 2141, the top of the blocking seal body 23 may seal the perforation 2141, or a contact seal (i.e., no gap between the two) may be formed between the force-bearing rod body and the perforation 2141. Furthermore, to achieve the best sealing effect, the top of the blocking seal body 23 may seal the perforation 2141, and the contact seal may be formed between the force-bearing rod body and the perforation 2141.

Please refer to FIGS. 3 and 14, the elastic restoring member 24, serving as a structural member capable of restoring the blocking seal body 23, may be installed at the bottom onto the inner wall of the water intaking chamber 211. However, to enhance the stability of the elastic restoring member 24, as a preferred implementation of the present embodiment, the control valve mechanism further comprises a mounting branch pipe 25, which is provided with a mounting bracket 251 therein. One end of the mounting branch pipe 25 is in communication with the water intaking chamber 211, and its other end is for communication with the water pipe mechanism 4. The elastic restoring member 24 is provided between the mounting bracket 251 and the blocking seal body 23.

Furthermore, please refer to FIG. 14, the elastic restoring member 24 is a spring and is installed between the mounting bracket 251 and the blocking seal body 23. Preferably, the mounting bracket 251 is a cross-shaped bracket provided inside the mounting branch pipe 25, which may provide installation support while further facilitating the passage of the waterflow.

Please refer to FIG. 15 in conjunction with FIG. 3, the water pipe mechanism 4 comprises a pipe core 41 and a water pipe 43, and the pipe core 41 comprises a liquid flow channel where a water outlet and a water inlet have been provided, and is directly or indirectly inserted into and in communication with the water intaking chamber 211. Specifically, when cooperating with the mounting branch pipe 25, the pipe core 41 is inserted into and provided in the mounting branch pipe 25 via a bottom mounting port 14, is provided with a connecting hard pipe 42 at the bottom, and the water pipe 43 is sleeved on the connecting hard pipe 42. When there is no need to cooperate with the mounting branch pipe 25, the pipe core 41 may be directly inserted and provided in the water intaking chamber 211.

It should be noted that whether the pipe core 41 is inserted into and provided in the water intaking chamber 211 or the mounting branch pipe 25, the pipe core 41 is provided with a first pipe core seal slot 411 near the water outlet, in which first pipe core seal slot 411 there is a first pipe core seal ring 412 for sealing.

Further, the connecting hard pipe 42 is provided with a conical portion 421 which is convenient for sleeving.

The water pipe 43 is sleeved onto the pipe core 41 and is limited and snaps to the bottom mounting port 14 to be stably mounted. Further, the present embodiment is further provided with a protection bottom shell 44 for protecting a socket joint of the water pipe 43 with the pipe core 41. Specifically, the protection bottom shell 44 has a socket port at the top, and when the water pipe 43 is sleeved onto the connecting hard pipe 42, the socket port of the protection bottom shell 44 protects the pipe core 41 and is sleeved onto the pipe core 41. At this time, the bottom mounting port 14 is implemented as a bottom opening in the protection bottom shell 44 for the water pipe 43 to pass through.

The above technical solutions, either individually or in combination, exhibit the following beneficial effects:

The blocking seal body 23 blocks the passage between the water intaking chamber 211 and the control chamber 212 by means of the elastic restoring member 24, which can completely cut off and block the waterflow. During use, the control valve spool 22 is actuated to apply force to the blocking seal body 23, so as to jack up the blocking seal body 23 and open the passage, thereby achieving communication between the two chambers, and subsequently achieving communication between the nozzle 3 and the water pipe mechanism 4 which are in respective communication with the two chambers, so as to perform oral cleansing. The structure is simple and is convenient to operate, and may block waterflow without water leakage.

The force-applying part 2211 is a curved surface with a gradient circumferential radius, and when the valve spool body is rotated, the curved surface close to the force-bearing part 231 gradually increases in its circumferential radius and gradually presses on the blocking seal body 23, such that the blocking seal body 23 opens the communicating passage. This process is smooth and convenient.

A constraining slot 2212 is provided where the curved surface presses against the force-bearing part 231 to open the communicating passage, such that the force-bearing part 231 may be held in the constraining slot 2212 through elastic support of the elastic restoring member 24. By keeping the opened state of the communicating passage, it is possible to facilitate the continuous flow of waterflow, which in turn makes it convenient for the user to continuously perform oral cleansing operations.

The control assembly achieves pure mechanical transmission through direct meshing of the toothed segments, eliminating the need for electrified structural settings on the handle, and facilitating cost-effectiveness and an intuitive and effective control.

In the blocking state, even if there is a liquid level difference between the water intaking chamber of the oral irrigator main body and the handle, the pressure exerted by the liquid in the water intaking chamber on the blocking seal body may better seal the communicating passage, thus creating a positive effect. As a result, there is no risk of leaks/drips when the handle is below the water level in the oral irrigator main body for a long period of time.

The components inside the handle are arranged in a linear configuration, which is in line with the ergonomic design of the handle, making it more compact and convenient to hold and use.

The person skilled in the art should understand that the embodiments of the present disclosure described above are provided as examples and do not limit the present disclosure. The purpose of the present disclosure has been fully and effectively achieved. The functions and structural principles of the present disclosure have been shown and explained in the embodiments, and the implementation of the present disclosure can be modified or altered in any way without departing from the principles stated.

## Claims

1. A control valve mechanism capable of controlling blocking or communicating of waterflow, **characterized by** comprising:
a valve seat (21) provided therein with at least a water intaking chamber (211) and a control chamber (212), the water intaking chamber (211) being in communication with the control chamber (212) through a communicating passage, and the control chamber (212) being provided with a mounting port (2121);
a control valve spool (22) provided in the control chamber (212) through the mounting port (2121) and provided with a force-applying part (2211) which is under control of the control valve spool (22) to apply force towards the water intaking chamber (211); and
a blocking seal comprising a blocking seal body (23) and an elastic restoring member (24), the blocking seal body (23) being provided in the water intaking chamber (211), restorably blocking the communicating passage by the elastic restoring member (24), being provided with a force-bearing part (231) that is subjected to force from the force-applying part (2211) through the communicating passage, and being moved to open the communicating passage after the force-bearing part (231) is subjected to force from the force-applying part (2211).

2. The control valve mechanism of claim 1 capable of controlling blocking or communicating of waterflow, **characterized in that** the control valve spool (22) comprises:
a valve spool body comprising a curved surface with a gradient circumferential radius, the force-applying part (2211) being implemented as the curved surface; and
a control assembly comprising a first arc-shaped toothed segment (224) and a first straight toothed segment (261), the first arc-shaped toothed segment (224) being provided on the valve spool body and located outside the mounting port (2121), the first straight toothed segment (261) being meshed with the first arc-shaped toothed segment (224) to drive the valve spool body to rotate inside the control chamber (212), and the curved surface gradually applying force to the force-bearing part (231) due to rotation of the valve spool body.

3. The control valve mechanism of claim 1 or 2 capable of controlling blocking or communicating of waterflow, **characterized in that** the curved surface is provided with a constraining slot (2211) for holding the force-bearing part (231), and when the force-bearing part (231) is held in the constraining slot (2211), the blocking seal body (23) keeps a state of opening the communicating passage.

4. The control valve mechanism of any of claims 1 to 3 capable of controlling blocking or communicating of waterflow, **characterized in that** the force-bearing part (231) is implemented as a force-bearing rod body, which passes through the communicating passage and is subjected to force from the force-applying part (2211) to drive the blocking seal body (23) to open the communicating passage.

5. The control valve mechanism of any of claims 1 to 4 capable of controlling blocking or communicating of waterflow, **characterized in that** the communicating passage has a diameter greater than a rod diameter of the force-bearing rod body.

6. The control valve mechanism of any of claims 1 to 5 capable of controlling blocking or communicating of waterflow, **characterized in that** a top of the blocking seal body (23) is capable of blocking the communicating passage.

7. The control valve mechanism of any of claims 1 to 6 capable of controlling blocking or communicating of waterflow, **characterized in that** the communicating passage comprises a perforation (2141) and several communication holes (2142); the force-bearing rod body is inserted into the perforation (2141) and is subjected to force from the force-applying part (2211); the communication hole (2142) is in communication with the control chamber (212) and the water intaking chamber (211), and is restorably blocked by the blocking seal body (23) by means of the elastic restoring member (24).

8. The control valve mechanism of any of claims 1 to 7 capable of controlling blocking or communicating of waterflow, **characterized in that** the blocking seal body (23) is provided with a first blocking seal ring (232) near the communication hole (2142), and the first blocking seal ring (232) restorably seals the communicating passage along with the blocking seal body (23) by means of the elastic restoring member (24).

9. The control valve mechanism of any of claims 1 to 8 capable of controlling blocking or communicating of waterflow, **characterized in that** a top of the blocking seal body (23) is capable of blocking the perforation (2141), and/or, the force-bearing rod body and the perforation (2141) form a contact seal therebetween.

10. The control valve mechanism of any of claims 1 to 9 capable of controlling blocking or communicating of waterflow, **characterized in that** the control valve mechanism further comprises a mounting branch pipe (25), which is provided with a mounting bracket (251) therein, one end of the mounting branch pipe (25) is in communication with the water intaking chamber (211), the other end of the mounting branch pipe (25) is for communication with the water pipe mechanism (4), and the elastic restoring member (24) is provided between the mounting bracket (251) and the blocking seal body (23).

11. The control valve mechanism of any of claims 1 to 10 capable of controlling blocking or communicating of waterflow, **characterized in that** the elastic restoring member (24) is a spring and is installed between the mounting bracket (251) and the blocking seal body (23).

12. An oral irrigator handle capable of controlling the blocking or communicating of waterflow, **characterized by** comprising a handle housing (1), a nozzle (3), a water pipe mechanism (4), and the control valve mechanism of any of claims 1 to 11 capable of controlling blocking or communicating of waterflow; the handle housing (1) comprises a mounting chamber therein, a top mounting port (13) at its top, and a bottom mounting port (14) at its bottom; the control valve mechanism is provided in the mounting chamber, the nozzle (3) is in communication with the control chamber (212) through the top mounting port (13), and the water pipe mechanism (4) is in communication with the water intaking chamber (211) and the oral irrigator main body through the bottom mounting port (14).
